# EUROPÄISCHE PATENTSCHRIFT

(11) **EP 2 874 562 B1**
(45) Veröffentlichungstag und Bekanntmachung des Hinweises auf die Patenterteilung: **18.12.2019**
(21) Anmeldenummer: 13737607.5
(22) Anmeldetag: 17.07.2013
(51) Int. Cl.: A61C 8/00

(54) **ABUTMENTSCHRAUBE**
ABUTMENT SCREW
VIS DE BUTÉE DENTAIRE

(30) Priorität: 18.07.2012 DE 102012106469; 18.07.2012 DE 102012106468; 18.07.2012 DE 202012102748 U
(43) Veröffentlichungstag der Anmeldung: 27.05.2015
(73) Patentinhaber: Spindler, Bruno, 77728 Oppenau (DE)
(72) Erfinder: Spindler, Bruno, 77728 Oppenau (DE)
(74) Vertreter: Thämer, Wolfgang
(86) Internationale Anmeldenummer: PCT/EP2013/065086
(87) Internationale Veröffentlichungsnummer: WO 2014/012970

(56) Entgegenhaltungen:
- EP-A1- 2 269 538
- EP-A1- 2 269 538
- WO-A1-00/54697
- WO-A1-2011/042583

## Beschreibung

Die vorliegende Erfindung betrifft eine Abutmentschraube und ein dazugehöriges Drehwerkzeug für ein Zahnimplantat.

Herkömmliche Abutmentschrauben zum Befestigen eines Abutmentaufsatzes auf einem Kieferimplantat sind oftmals in Imbusform gebildet. Bei einer Anschrägung des Abutmentaufsatzes kann der Rand des Imbusschraubenkopfes jedoch stören. Beispielsweise ragt der Rand des Imbusschraubenkopfes Ober den Abutmentaufsatz hinaus und behindert das Aufsetzen von weiteren Abutmentteilen und die weitere Bearbeitung. Aus der EP 2 269 538 A1 ist u.a. eine Abutmentschraube bekannt, die Teil eines prothetischen Implantats in der Zahnheilkunde ist. Die Schraube hat einen relativ flachen Kopf, der zum Gewinde hin eine 45°-Fase aufweist. Am Kopf ist ein kugelförmiger Aufsatz angeformt, über den das Anzugsdrehmoment in die Schraube eingeleitet werden kann. Der Aufsatz hat am Umfang sechs räumlich gekrümmte Kerben, die bezüglich der Geometrie das Gegenstück zu einem Innensechsrund nach EN ISO 10664 bilden.

Die WO 2011/042583 A1 zeigt ein Abutment, das mittels einer Schraube in einem Implantat befestigt werden kann.

Die WO 00/54697 A1 zeigt einen Halter zum Anordnen einer Schraube und eines Distanzelements in einem Implantat.

Es ist daher die Aufgabe der vorliegenden Erfindung, eine Abutmentschraube bereitzustellen, mit der sich ein Abutmentaufsatz stabil auf einem Kieferimplantat befestigen lässt.

Diese Aufgabe wird durch den Gegenstand des unabhängigen Anspruchs 1 gelöst. Vorteilhafte Ausführungsformen sind Gegenstand der Beschreibung der Zeichnungen und der abhängigen Ansprüche.

Gemäß eines ersten Aspekts wird die oben genannte Aufgabe durch eine Abutmentschraube zum Befestigen eines mit einem Einführkanal versehenen Abutmentaufsatzes auf einem Kieferimplantat gelöst, mit einem Gewindeschaft zum Eindrehen der Abutmentschraube in das Kieferimplantat. Der Gewindeschaft hat einen konisch zulaufenden Abschnitt zum Ausüben einer Kraft auf den Abutmentaufsatz, zur Herstellung einer formschlüssigen und großflächigen Verbindung mit einem konischen Abschnitt im Inneren des Einführkanals des Abutmentaufsatzes zur Erhöhung der Stabilität des Abutmentaufsatzes. Die Abutmentschraube hat einen umlaufenden, konkav ausgebildeten Vertiefungsabschnitt, der eine den Gewindeschaft umlaufende ringförmige Nut darstellt. Die Abutmentschraube hat zum Einsetzen in eine Aussparung eines Drehwerkzeuges und zum Übertragen eines durch die Aussparung ausgeübten Drehmomentes auf den Gewindeschaft einen Schraubenkopf, der einen Sechskant-Kugelkopf aufweist.

Dadurch wird beispielsweise der technische Vorteil erreicht, dass die Größe des Schraubenkopfes verringert wird, so dass der Abutmentaufsatz seitlich in einem größeren Bereich bearbeitet werden kann, ohne dass der Schraubenkopf hervorsteht.

In einer vorteilhaften Ausführungsform der Abutmentschraube ist der Schraubenkopf auf einer Drehachse der Abutmentschraube angeordnet. Dadurch wird beispielsweise der technische Vorteil erreicht, dass sich ein Drehmoment besonders wirksam auf dem Schraubenkopf übertragen lässt. Durch die mittig angebrachte Aussparung wird ein Einbringen aus einem nicht in der Implantatachse befindlichen Einführungskanal erleichtert.

In einer weiteren vorteilhaften Ausführungsform der Abutmentschraube weist der Schraubenkopf eine Symmetrie zur Drehachse der Abutmentschraube auf. Dadurch wird beispielsweise der technische Vorteil erreicht, dass der Schraubenkopf leicht in eine Aussparung des Drehwerkzeuges eingesetzt werden kann.

In einer weiteren nichterfindungsgemäßen Ausführungsform der Abutmentschraube weist der Schraubenkopf im Querschnitt eine andere Vielkantform, eine Vielzahnform oder eine Vielrundform (Torx) auf. Dadurch wird beispielsweise ebenfalls der technische Vorteil erreicht, dass sich Drehmomente einfach auf den Schraubenkopf übertragen lassen.

In einer weiteren vorteilhaften Ausführungsform der Abutmentschraube ist der Schraubenkopf kugelkopfförmig ausgebildet. Dadurch wird beispielsweise der technische Vorteil erreicht, dass auch in einer Winkelstellung des Drehwerkzeugs ein Drehmoment auf den Schraubenkopf ausgeübt werden kann.

Erfindungsgemäß umfasst der Gewindeschaft einen konisch zulaufenden Abschnitt zum Ausüben einer Befestigungskraft auf den Abutmentaufsatz. Dadurch wird beispielsweise der technische Vorteil erreicht, dass eine formschlüssige und großflächige Verbindung mit einem konischen Abschnitt eines Abutmentaufsatzes hergestellt werden kann. Dadurch verteilt sich die ausgeübte Kraft auf den Abutmentaufsatz großflächig. Zudem wird verhindert, dass sich die Befestigungsschraube löst und Hohlräume, in denen sich Bakterien einnisten können, werden minimiert. Durch die konische Ausgestaltung wird der gesamte Übergang von Implantat in den Abutmentaufsatz deutlich gegenüber einer konventionellen Schraube mit Kopf und geradem Schaft verstärkt. Die Stabilität des Abutmentaufsatzes erhöht sich hierdurch um ein Viertel.

In einer weiteren vorteilhaften Ausführungsform der Abutmentschraube erstreckt sich der konisch zulaufende Abschnitt von dem Schraubenkopf bis zur Mitte der Abutmentschraube. Dadurch wird beispielsweise der technische Vorteil erreicht, dass sich die ausgeübte Kraft auf den Abutmentaufsatz großflächig verteilt.

In einer weiteren vorteilhaften Ausführungsform der Abutmentschraube umfasst der Gewindeschaft einen rundlich gewölbten Abschnitt zum Ausüben einer Befestigungskraft auf den Abutmentaufsatz. Dadurch wird beispielsweise der technische Vorteil erreicht, dass die Abutmentschraube in Verbindung mit einem rund zulaufenden Abschnitt innerhalb eines Abutmentaufsatzes verwendet werden kann, der sich auf technisch einfachere Weise herstellen lässt.

Erfindungsgemäß umfasst der Gewindeschaft einen umlaufenden Vertiefungsabschnitt zum Herumführen der Abutmentschraube um eine Kante. Dadurch wird beispielsweise der technische Vorteil erreicht, dass die Abutmentschraube in abgewinkelten Kanälen eingeführt werden kann.

Erfindungsgemäß ist der Vertiefungsabschnitt konkav ausgebildet. Dadurch wird beispielsweise der technische Vorteil erreicht, dass ein Verklemmen beim Einführen der Abutmentschraube verhindert werden kann.

In einer vorteilhaften Ausführungsform der Abutmentschraube weist der Gewindeschaft an seinem Ende eine Abrundung auf. Dadurch wird beispielsweise der technische Vorteil erreicht, dass sich die Abutmentschraube leicht in einen Einführungskanal einführen lässt.

Gemäß einem zweiten Aspekt wird die oben genannte Aufgabe durch ein Drehwerkzeug (nicht beansprucht) zum Befestigen eines Abutmentaufsatzes auf einem Kieferimplantat mittels einer Abutmentschraube gelöst, mit einem Schaft zum Einführen in einen Einführkanal in dem Abutmentaufsatz und einer in dem Schaft angeordneten Aussparung zum Einsetzen eines Schraubenkopfes der Abutmentschraube und zum Übertragen eines Drehmomentes auf den Schraubenkopf. Dadurch wird beispielsweise der technische Vorteil erreicht, dass die Größe des Schraubenkopfes verringert werden kann.

In einer vorteilhaften Ausführungsform des Drehwerkzeuges ist die Aussparung auf einer Drehachse des Schaftes angeordnet. Dadurch wird beispielsweise ebenfalls der technische der technische Vorteil erreicht, dass sich ein Drehmoment wirksam auf den Schraubenkopf übertragen lässt.

In einer weiteren vorteilhaften Ausführungsform des Drehwerkzeuges weist die Aussparung eine Symmetrie zur Drehachse des Schaftes auf. Dadurch wird beispielsweise der technische Vorteil erreicht, dass das Drehwerkzeug leicht auf den Schraubenkopf aufgesetzt werden kann.

In einer vorteilhaften Ausführungsform des Drehwerkzeuges weist die Aussparung im Querschnitt eine Vielkantform, eine Vielzahnform oder eine Vielrundform auf. Dadurch wird beispielsweise der technische Vorteil erreicht, dass sich ein Drehmoment wirksam auf den Schraubenkopf übertragen lässt.

Ausführungsbeispiele sind in den Zeichnungen dargestellt und werden im Folgenden näher beschrieben.

Es zeigen:
Fig. 1 mehrere Darstellungen einer erfindungsgemäßen Abutmentschraube;
Fig. 2 eine perspektivische Ansicht und eine Querschnittsansicht des Abutmentaufsatzes mit der Abutmentschraube;
Fig. 3 mehrere Ansichten eines Drehwerkzeugs zum Befestigen der Abutmentschraube;
Fig. 4 eine vergrößerte Querschnittsansicht des Drehwerkzeuges und der Abutmentschraube in einem Abutmentaufsatz; und
Fig. 5 mehrere Ansichten des Drehwerkzeuges und der Abutmentschraube.

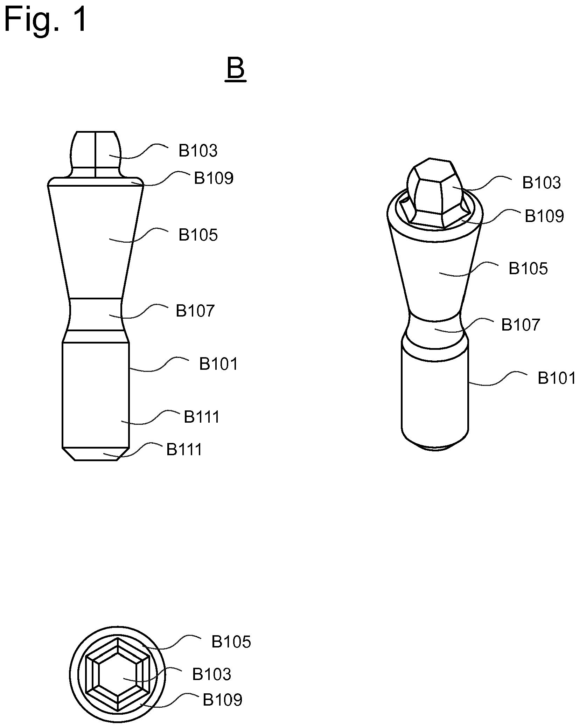

Fig. 1 zeigt mehrere Darstellungen einer erfindungsgemäßen Abutmentschraube B für ein Zahnimplantat. Die Abutmentschraube B weist einen Schraubenkopf B103 auf, der in eine entsprechende Aussparung in Drehwerkzeug eingesetzt werden kann. Der Schraubenkopf B103 weist eine Sechskant-Kugelkopfform auf. Die Sechskantform ist symmetrisch zur Drehachse. Der Schraubenkopf B103 ist auf einer Unterstützungsfläche B109 angeordnet und umfasst eine planare oder leicht abfallende Oberseite. Daneben umfasst die Abutmentschraube B einen Gewindeschaft B101 auf, der an seinem unteren Ende ein nicht gezeigtes Gewinde zum Eindrehen der Abutmentschraube B in ein Kieferimplantat umfasst. Der Schraubenkopf B103 dient zum Übertragen eines durch die Drehwerkzeugaussparung ausgeübten Drehmomentes auf den Gewindeschaft B101. Der Schraubenkopf B103 ragt aus der Unterstützungsfläche B109 hervor und ist mittig auf einer Drehachse der Abutmentschraube angeordnet. Die Unterstützungsfläche B109 dient als Basis für den Schraubenkopf B103.

Im Allgemeinen kann der Schraubenkopf B103 jedoch auch eine andere Form aufweisen. Beispielsweise kann der Schraubenkopf B103 im Querschnitt eine Vielkantform, eine Vielzahnform oder eine Vielrundform aufweisen. Alle diese Formen können kugelkopfartig ausgebildet sein, so dass ein Drehwerkzeug auch in seitlich abgewinkelt auf den Schraubenkopf B103 aufgesetzt werden kann.

Unterhalb des Schraubenkopfes B103 umfasst der Gewindeschaft B101 einen konisch zulaufenden Abschnitt B105 zum Ausüben einer Andrückkraft auf einen Abutmentaufsatz. Der konische zulaufende Abschnitt B105 erstreckt sich von der Unterstützungsfläche B109 des Schraubenkopfes B103 bis zu einem Vertiefungsabschnitt B107, in der Mitte der Abutmentschraube B. Der konisch zulaufende Abschnitt B105 grenzt an den Vertiefungsabschnitt B107 an. Der konisch zulaufende Abschnitt B105 weist einen Öffnungswinkel von 30° auf, also jeweils 15° zur Senkrechten. Allerdings kann der Öffnungswinkel auch andere Werte annehmen.

An seinem unteren Ende weist der konisch zulaufende Abschnitt B105 einen Durchmesser auf, der geringer als der Durchmesser des Gewindeschafts B101 ist. An seinem oberen Ende weist der konisch zulaufende Abschnitt B105 einen Durchmesser auf, der größer als der Durchmesser des Gewindeschafts B101 ist.

Beispielsweise weist der konisch zulaufende Abschnitt an seiner Oberseite einen Durchmesser von 2,04 mm und an seiner Unterseite einen Durchmesser von 1,6 mm auf. Im Allgemeinen kann der Durchmesser an der Oberseite bis zu 4 mm betragen. Der kleinste Durchmesser an der Unterseite kann 1,2 mm betragen.

Die Länge des konisch zulaufenden Abschnitts beträgt beispielsweise ca. 2 mm. Der konisch zulaufende Abschnitt B105 drückt in diesem Fall entlang seiner Länge großflächig auf einen ebenfalls konisch zulaufenden Abschnitt im Inneren eines Schraubkanals. Zur Verminderung einer Haft- oder Gleitreibung kann der konische Abschnitt B105 oder der Gewindeschaft B101 eine Beschichtung aus amorphem hartem oder diamantähnlichem Kohlenstoff oder Teflon aufweisen.

In einer anderen Ausführungsform kann der Gewindeschaft B101 einen rundlich gewölbten Abschnitt zum Ausüben einer Kraft auf den Abutmentaufsatz umfassen, der rundlich gewölbte Abschnitt kann beispielsweise im Querschnitt konkav, konvex oder rund zulaufen. Der rundlich gewölbte Abschnitt kann beispielsweise die Form einer Halbkugel aufweisen. Durch den rundlich gewölbten Abschnitt findet der Kontakt zwischen Abutmentschraube B und dem Abutmentaufsatz auf einer gewölbten Kontaktfläche statt.

In diesem Fall kann ein Schraubkanal im inneren eines Abutmentaufsatzes technisch einfacher mithilfe eines Radiusfräser hergestellt werden kann, der in Richtung des Einführungskanals des Abutmentaufsatzes eingestochen wird.

Unterhalb des konisch zulaufenden Abschnitts B105 umfasst der Gewindeschaft B101 einen umlaufenden Vertiefungsabschnitt B107 zum Herumführen der Abutmentschraube A um eine Kante in einem Einführungskanal des Abutmentaufsatzes. Der Vertiefungsabschnitt B107 befindet sich in ungefähr in der Mitte der Abutmentschraube B. Der Vertiefungsabschnitt B107 wird durch eine ringförmige Nut gebildet, die um den Gewindeschaft B101 herumläuft. An der Stelle des Vertiefungsabschnittes B107 weist der Gewindeschaft einen geringeren Durchmesser auf als an der Stelle eines Gewindes. Der Vertiefungsabschnitt B107 ist konkav ausgebildet, so dass ein kantenloser Übergang entsteht. Im Allgemeinen kann der Vertiefungsabschnitt B107 einen bogenförmigen, einen v-förmigen, einen u-förmigen oder einen rechtechteckförmigen Querschnitt aufweisen.

Unterhalb des Vertiefungsabschnittes B107 umfasst der Gewindeschaft B101 einen zylindrischen Abschnitt B111, auf dem ein Außengewinde angeordnet ist. Am unteren Ende des zylindrischen Abschnitts B111 ist eine Abrundung angeordnet, die ein Einführen der Abutmentschraube B in einen Einführungskanal erleichtert.

Die Abutmentschraube B ist einstückig ausgebildet und ist beispielsweise aus Titan oder Zirkon hergestellt. Im Allgemeinen kann die Abutmentschraube aber auch aus jedem anderen geeigneten Material hergestellt sein. Die Schraube kann eine Beschichtung aus beispielsweise Titannitrit erhalten, um die Haftreibung gegenüber dem Abutmentaufsatz auf ein definiertes Maß zu bringen. Im Allgemeinen kann die Beschichtung kann aber auch aus jedem anderen geeigneten Material hergestellt sein. Die Abutmentschraube B weist eine kontinuierliche und kantenlose Außenseite auf.

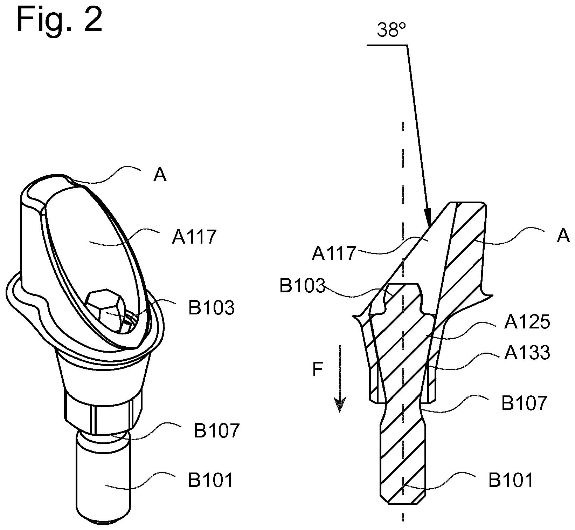

Fig. 2 zeigt eine perspektivische Ansicht und eine Querschnittsansicht eines Abutmentaufsatzes A mit der Abutmentschraube B. Die Abutmentschraube B wird in einen Einführkanal A117 eingesetzt und dient zum Befestigen des Abutmentaufsatzes A auf einem Kieferimplantat. Durch die zentrale Anordnung des Schraubenkopfes B103, kann der Einführkanal in höherem Maße abgeschrägt sein als bei der Verwendung einer Abutmentschraube B mit Imbusschraubenkopf, ohne dass dieser seitlich hervorsteht.

Der Vertiefungsabschnitt B107 ermöglicht, dass die Abutmentschraube B an einer Kante A133 innerhalb eines Schraubkanals vorbeigeführt werden kann. Durch die Abutmentschraube B wird an einer Kontaktfläche mit dem Abutmentaufsatz A eine Andrückkraft F auf den Abutmentaufsatz ausgeübt. In der gezeigten Ausführungsform ist eine Abschrägung des Abutmentaufsatzes A von bis zu 38° gegenüber der Vertikalen möglich, ohne dass der Schraubenkopf B103 aus dem Einführungskanal herausragt.

Durch die Verwendung einer Abutmentschraube B mit einem hervorstehenden, zentralen Schraubenkopf B103 (inverses Schrauben Design) kann eine größere vestibuläre Abwinkelung des Abutmentaufsatzes A erreicht werden.

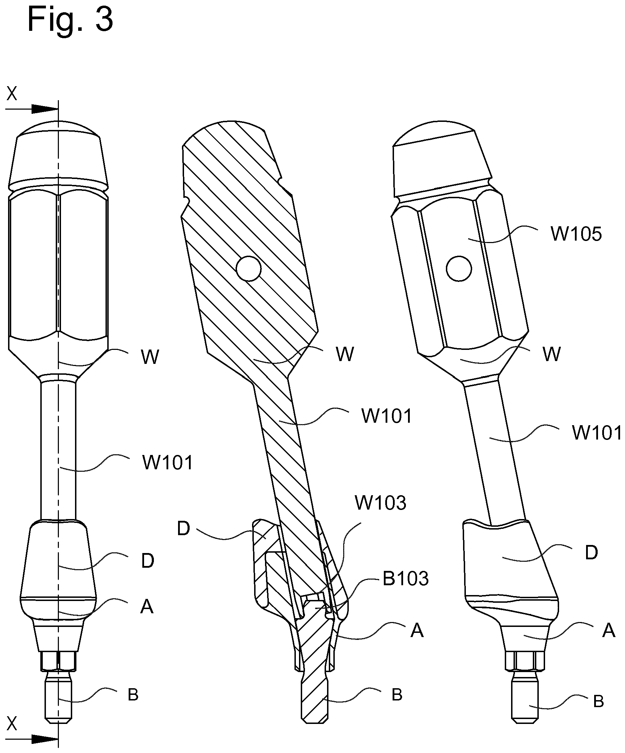

Fig. 3 zeigt mehrere Ansichten eines Drehwerkzeugs W zum Befestigen der Abutmentschraube D für ein Zahnimplantat. Die Abutmentschraube B befindet sich in einem Abutment, dass einen Abutmentaufsatz A und einen Kronenklebekörper C umfasst. Das Drehwerkzeug W wird in einen gemeinsamen Einführungskanal eingeschoben, der durch den Abutmentaufsatz A und den Kronenklebekörper D gebildet wird. Zu diesem Zweck weist das Drehwerkzeug einen zylindrischen Schaft W101 auf, der in den Einführungskanal eingeschoben wird. Der zylindrische Schaft W101 weist an seinem Ende eine zentrale Aussparung W103 auf, in die der Schraubenkopf B103 einführbar ist. Die Aussparung W103 übergreift den Schraubenkopf und dient zum Ausüben eines Drehmomentes auf den Schraubenkopf. Das Drehwerkzeug W weist zudem einen Sechskantabschnitt W105 zum Einsetzen in eine Ratsche auf

Das Drehwerkzeug W ist einstückig ausgebildet und ist beispielsweise aus Titan oder Zirkon hergestellt. Im Allgemeinen kann das Drehwerkzeug aber auch aus jedem anderen geeigneten Material hergestellt sein.

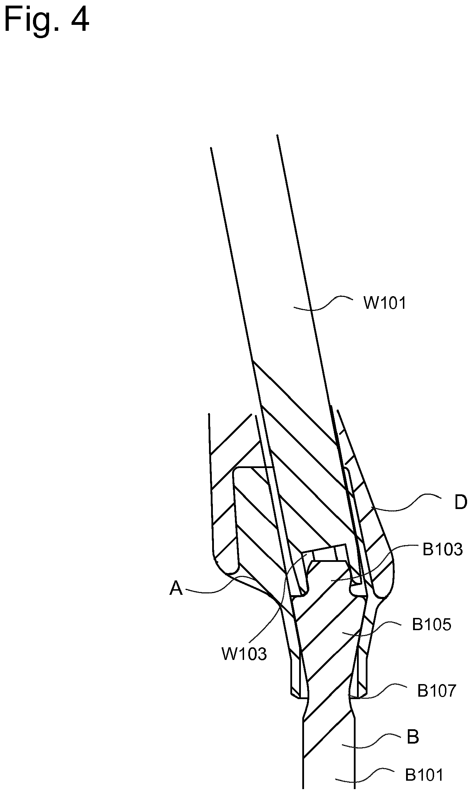

Fig.4 zeigt eine vergrößerte Querschnittsansicht durch den Abutmentaufsatz A mit dem Kronenklebekörper D und der Abutmentschraube B in Verbindung mit dem Drehwerkzeug W. Die Das Drehmoment wird über die Aussparung W103 auf den Schraubenkopf B103 übertragen. Beim Eindrehen der Abutmentschraube B wird über den konisch zulaufenden Abschnitt B105 eine Kraft auf den Abutmentaufsatz A ausgeübt. Der Schaft W101 ist seitlich geneigt. Die Aussparung W103 weist eine Sechskantform auf, die den Sechskant-Kugelkopf übergreift.

Im Allgemeinen kann die Aussparung W103 auch eine andere Form aufweisen, über die sich ein Drehmoment auf den Schraubenkopf übertragen lässt. Beispielsweise kann die Aussparung in einer Vielkantform, einer Vielzahnform oder einer Vielrundform vorliegen.

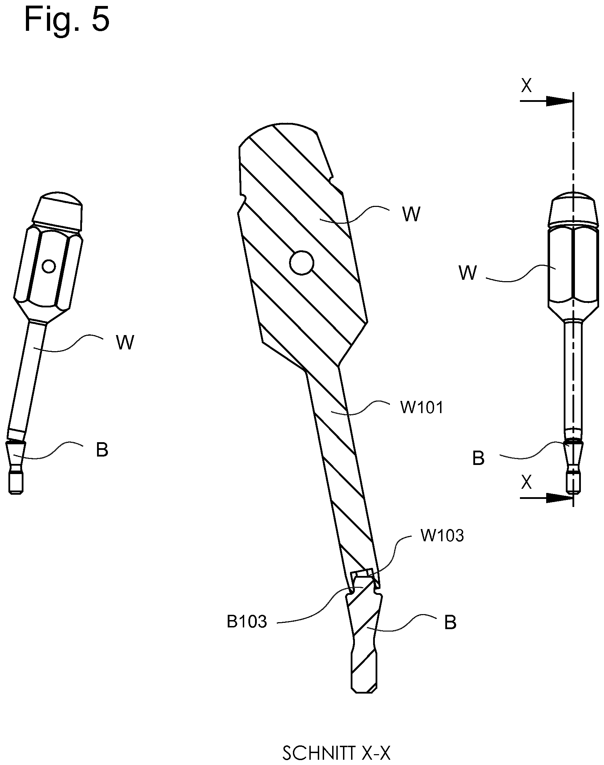

Fig. 5 zeigt weitere Ansichten des Drehwerkzeuges W und der Abutmentschraube B ohne Abutmentaufsatz. Das Drehwerkzeug W ist seitlich geneigt und greift mit der innerhalb des Schaftes W101 gebildeten Aussparung W103 über den Schraubenkopf B103.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

## Patentansprüche

1. Abutmentschraube (B) zum Befestigen eines mit einem Einführkanal (A117) versehenen Abutmentaufsatzes (A) auf einem Kieferimplantat:
- mit einem Gewindeschaft (B101) zum Eindrehen der Abutmentschraube (B) in das Kieferimplantat, wobei der Gewindeschaft (B101) einen konisch zulaufenden Abschnitt (B105) zum Ausüben einer Kraft auf den Abutmentaufsatz (A) umfasst, zur Herstellung einer formschlüssigen und großflächigen Verbindung mit einem konischen Abschnitt im Inneren des Einführkanals des Abutmentaufsatzes zur Erhöhung der Stabilität des Abutmentaufsatzes;
- mit einem umlaufenden, konkav ausgebildeten Vertiefungsabschnitt (B107), der eine den Gewindeschaft (B101) umlaufende ringförmige Nut darstellt und
- mit einem Schraubenkopf, der einen Sechskant-Kugelkopf (B103) aufweist, zum Einsetzen in eine Aussparung (W101) eines Drehwerkzeuges (W) und zum Übertragen eines durch die Aussparung (W101) ausgeübten Drehmomentes auf den Gewindeschaft (B101).

2. Abutmentschraube (B) nach Anspruch 1, wobei der Sechskant-Kugelkopf (B103) auf einer Drehachse der Abutmentschraube (B) angeordnet ist.

3. Abutmentschraube (B) nach einem der vorangehenden Ansprüche, wobei der Sechskant-Kugelkopf (B103) und der Abschnitt (B105) eine Symmetrie zur Drehachse der Abutmentschraube (B) aufweisen.

4. Abutmentschraube (B) nach einem der vorangehenden Ansprüche, wobei der Gewindeschaft (B101) an seinem Ende eine Abrundung (B113) aufweist.

## Claims

1. An abutment screw (B) for fastening an abutment attachment (A) provided with an introduction channel (A117) onto an oral implant:
- comprising a threaded shank (B101) for screwing the abutment screw (B) into the oral implant, wherein the threaded shank (B101) comprises a conically tapering section (B105) for exerting a force on the abutment attachment (A) to produce a positive-locking and large-area connection to a conical section in the interior of the introduction channel of the abutment attachment to increase the stability of the abutment attachment;
- comprising a circumferential, concave recess section (B107), which forms an annular groove encircling the threaded shank (B101), and
- comprising a screw head which has a hexagonal ball head (B103) for inserting into a recess (W101) of a turning tool (W) and for transferring a torque, exerted through the recess (W101), to the threaded shank (B101).

2. The abutment screw (B) according to claim 1, wherein the hexagonal ball head (B103) is arranged on an axis of rotation of the abutment screw (B).

3. The abutment screw (B) according to one of the preceding claims, wherein the hexagonal ball head (B103) and the section (B105) have a symmetry to the axis of rotation of the abutment screw (B).

4. The abutment screw (B) according to one of the preceding claims, wherein the threaded shank (B101) has a rounded portion (B113) at its end.

## Revendications

1. Vis d'aboutement (B), destinée à fixer un embout d'aboutement (A) muni d'un canal d'introduction (A117) sur un implant maxillaire :
- pourvue d'une tige filetée (B101) destinée à visser la vis d'aboutement (B) dans l'implant maxillaire, la tige filetée (B101) comprenant un tronçon (B105) se rétrécissant en forme conique, destiné à exercer une force sur l'embout d'aboutement (A), pour établir une liaison par complémentarité de forme et à grande surface avec un tronçon conique à l'intérieur du canal d'introduction de l'embout d'aboutement, pour augmenter la stabilité de l'embout d'aboutement ;
- pourvue d'un tronçon évidé (B107) périphérique, conçu de forme concave, qui représente une rainure annulaire entourant la tige filetée (B101) et
- pourvue d'une tête de vis, laquelle comporte une tête hexagonale sphérique (B103), destinée à être insérée dans un évidement (W101) d'un outil tournant (W) et à transférer sur la tige filetée (B101) un couple de rotation exercé dans l'évidement (W101).

2. Vis d'aboutement (B) selon la revendication 1, la tête hexagonale sphérique (B103) étant placée sur un axe de rotation de la vis d'aboutement (B).

3. Vis d'aboutement (B) selon l'une quelconque des revendications précédentes, la tête hexagonale sphérique (B103) et le tronçon (B105) faisant preuve d'une symétrie par rapport à l'axe de rotation de la vis d'aboutement (B).

4. Vis d'aboutement (B) selon l'une quelconque des revendications précédentes, la tige filetée (B101) comportant sur son extrémité un arrondissement (B113).
